# EUROPÄISCHE PATENTSCHRIFT

(11) **EP 1 010 401 B1**
(45) Veröffentlichungstag und Bekanntmachung des Hinweises auf die Patenterteilung: **05.02.2003**
(21) Anmeldenummer: 98121416.6
(22) Anmeldetag: 11.11.1998
(51) Int. Cl.: A61C 9/00, B05C 17/01

(54) **Verfahren und Vorrichtung zum Erzeugen einer Mehrkomponentenmasse, insbesondere für Dentalzwecke**
Method and device for obtaining a multicomponent mass, especially for dental purposes
Méthode et dispositif destinés à l'obtention d'une masse à plusieurs composantes, en particulier pour des applications dentaires

(43) Veröffentlichungstag der Anmeldung: 21.06.2000
(73) Patentinhaber: Ernst Mühlbauer GmbH & Co.KG, 25870 Norderfriedrichskoog (DE)
(72) Erfinder: Mühlbauer, Wolfgang, Dr., 22609 Hamburg (DE); Hörth, Hans, 21147 Hamburg (DE)
(74) Vertreter: Glawe, Delfs, Moll & Partner

(56) Entgegenhaltungen:
- EP-A- 0 087 029
- WO-A-98/44860
- JP-A- 61 197 068

## Beschreibung

Für die Herstellung aushärtender, zahnärztlicher Mehrkomponenten-Abdruckmassen verwendet man Komponenten, die in zylindrischen Kartuschen enthalten sind und synchron ausgepreßt werden, wobei sie gemischt werden (EP 87 029 A1, EP-A-492 413, WO98/44860). Die Kartuschen sind als Vorratszylinder ausgebildet, die an ihrem vorderen Ende eine Düsenöffnung bilden, die an je eine Einlaßöffnung einer Mischdüse angeschlossen sind und deren hinteres Ende offen ist zur Aufnahme eines Kolbens, der zum Auspressen der Masse im Zylinder vorbewegt wird. Dazu bedient man sich eines Geräts, in das die an die Mischdüse angeschlossenen oder anzuschließenden Kartuschen eingesetzt werden und das für jede Kartusche einen Stempel aufweist, der durch das hintere, offene Ende der Kartusche auf deren Kolben einwirkt. Damit ein konstantes Mischungsverhältnis erzielt wird, sind die Stempel zu synchroner Bewegung miteinander mechanisch verbunden und mit einem gemeinsamen Elektroantrieb versehen. Dieser enthält eine Kupplung, die gelöst werden kann, damit die Stempel von Hand aus den Kartuschen zurückgezogen werden können, wenn sie ausgetauscht werden sollen. Der Austausch findet statt, wenn die Kartuschen entleert sind oder wenn die Art der Abdruckmasse gewechselt werden soll.

Als Mischer werden gewöhnlich dynamische Mischer eingesetzt. Das sind längliche, zylindrische oder konische Behälter, in denen Mischerflügel umlaufen und denen am einen Ende die zu mischenden Komponenten zugeführt werden und aus deren anderem Ende die gemischte Masse durch eine Düsenöffnung austritt. An dem Zuführungsende des Behälters ist die Mischerwelle mit einem Kupplungsteil ausgestattet, das mit dem komplementären Kupplungsteil einer im Gerät vorgesehenen Antriebswelle eine Kupplung bildet, die durch das Ansetzen des Mischers an das Gerät geschlossen wird. Statt eines dynamischen Mischers mit umlaufenden Mischerflügeln kann auch ein statischer Mischer verwendet werden, der in gleicher Weise an das Gerät angesetzt wird und in welchem Schikanen angeordnet sind, die beim Durchfluß der Komponenten deren Mischung bewirken.

Bis vor kurzem wurden für die Herstellung von Abdruckmassen nahezu ausschließlich Komponenten von ähnlicher Viskosität verwendet. Beim Übergang auf Massen, deren Komponenten eine andere Viskosität als die herkömmlichen Komponenten haben oder bei denen sich die Viskositäten der zu mischenden Komponenten stark voneinander unterscheiden, stellt man eine Verschlechterung der Mischungsqualität fest, auf die man mit einer Änderung der Mischer reagierte. Dies hat den Nachteil, daß unterschiedliche Mischdüsen für unterschiedliche Mehrkomponentenmassen vorrätig gehalten werden müssen und eine Verwechslung der Mischdüsen zu Fehlern führen kann. Dies ist nicht nur lästig, sondern birgt auch die Gefahr, daß durch schlechtes Mischen nicht ausgehärtetes Material in den Rachenraum des Patienten tropfen kann oder auch durch punktuelles Überhitzen des Materials es zur Verbrennung am Patienten führen kann.

Der Erfindung liegt daher die Aufgabe zugrunde, unabhängig von der jeweiligen Art der zu mischenden Komponenten ein befriedigendes Mischergebnis zu gewährleisten und die Handhabung insgesamt zu vereinfachen. Dies gelingt durch die Merkmale der Ansprüche 1 bzw. *2*.

Demgemäß zeichnet sich ein Verfahren zum Erzeugen einer Mehrkomponentenmasse, insbesondere für Dentalzwecke, dadurch aus, daß die Vorschubgeschwindigkeit der Kolben in den die Komponenten enthaltenden Vorratszylindern beim Auspreßbetrieb auf einem vorbestimmten Wert konstant geregelt wird. Dabei wird der Lastzustand des Antriebs festgestellt. Der Antrieb wird bei fehlender Last mit höherer Rück- bzw. Vorholgeschwindigkeit betrieben. Dadurch wird einerseits die Notwendigkeit des manuellen Rückzugs der Kolben beim Kartuschenwechsel vermieden, andererseits wird der Kartuschenwechsel wesentlich beschleunigt und somit die Handhabung insgesamt verbessert. Dies ist dann besonders wichtig, wenn der Zahnarzt während der Anmischung von Abdruckmasse feststellt, daß die Kartuschen leer sind, bevor die erforderliche Position erreicht ist. Der Kartuschenwechsel muß dann sehr schnell stattfinden, damit die Position aus den neuen Kartuschen innerhalb der Tropfzeit der Mischung ergänzt werden kann.

Der den Auspreßbetrieb betreffende Teil der Erfindung beruht auf der Erkenntnis, daß eine unterschiedliche Viskosität der Komponenten nicht nur die rheologischen Vorgänge im Mischer beeinflußt, sondern auch die Verweilzeit darin. Durch Konstantregeln der Vorschubgeschwindigkeit bewirkt man eine konstante Mischzeit. Dadurch können die Unterschiede im Mischergebnis weitgehend und in einem für praktische Zwecke hinreichenden Ausmaß vermindert werden. Auch werden dadurch Unterschiede ausgeglichen, die bislang (ohne daß man den Grund dafür erkannt hätte) auf zufällig unterschiedliche Reibungsverhältnisse der Kolben in den Kartuschen und auf dadurch hervorgerufene unterschiedliche Vorschubgeschwindigkeiten zurückgingen. Bei einem Zweikomponentenmischer ähnlicher Bauweise (EP 87029 A1) kann zwar die absolute Vorschubgeschwindigkeit variiert werden, eine Regelung zur Konstanthaltung der Verschiebegeschwindigkeit ist jedoch nicht vorgesehen.

Besonders ausgeprägt ist die geschilderte Wirkung der Erfindung bei Verwendung dynamischer Mischer; aber auch bei Verwendung statischer Mischer wird die Konstanz des Mischergebnisses verbessert.

Zur Regelung der Vorschubgeschwindigkeit sind elektronische Einheiten verfügbar, die an Elektromotoren mit geringem Aufwand eine Messung und Konstanthaltung der Drehzahl im Auspreßbetrieb ermöglichen, beispielsweise durch Regelung der Spannung von Gleichstrommotoren oder Frequenzbeeinflussung bei Wechselstrommotoren. Ohne wesentlichen Mehraufwand kann diese Regelinheit neben weiteren Aufgaben auch zur erfindungsgemäßen Feststellung des Lastzustands des Elektromotors ausgebildet sein, wobei dieser jeweils dann zu einer höheren Laufgeschwindigkeit veranlaßt wird, wenn er unbelastet ist. Diese Feststellung kann durch Messung der Stromaufnahme in einfacher Weise geschehen. Wenn zum Rückzug der Stempel der Antrieb umgesteuert wird, stellt die elektronische Regeleinheit fest, daß der Antrieb unbelastet ist, und sorgt dafür, daß die Rückzugsbewegung mit hoher Geschwindigkeit stattfinden kann. Wenn umgekehrt nach dem Wechsel der Kartuschen die Vorrichtung wieder eingeschaltet wird und die Stempel vorfahren, wird gleichfalls Lastfreiheit festgestellt, solange die Stempel die Kolben noch nicht erreicht haben, und es wird die rasche Antriebsgeschwindigkeit eingestellt. So erreicht man, daß der Rückzug der Stempel von dem Kolben vor dem Kartuschenwechsel und ihr Vorlauf zu dem Kolben nach dem Kartuschenwechsel jeweils im Eilgang stattfindet.

Der Rücklauf der Stempel bei vollständiger Entleerung der Kartuschen kann automatisch eingeleitet werden, indem das Gerät mit einem Sensor versehen ist, der die Position der Stempel feststellt, die sie im Zustand der vollständigen Entleerung der Kartuschen einnehmen. Dieser Sensor wirkt auf eine elektronische Einrichtung, beispielsweise die erfindungsgemäße Regeleinheit, die dann die Umsteuerung des Antriebs in die Rücklaufrichtung bewirkt.

Die Kupplung zwischen der Mischerwelle und dem dafür in dem Gerät vorgesehenen Mischerantrieb ist bei bekannten Geräten so ausgeführt, daß die Mischerwelle antriebsseitig eine Mehrkantbohrung enthält, in die ein entsprechender Mehrkantansatz am Ende der geräteseitigen Antriebswelle eindringt. Beim Ansetzen der Mischdüse muß man darauf achten, daß der Mehrkantansatz richtig in die Mehrkantbohrung eindringt. Erst wenn dies sichergestellt ist, darf die Mischdüse fest an das Gerät angeschlossen werden. Dies verlangt eine gewisse Aufmerksamkeit, die als lästig empfunden wird, wenn - wie dies im allgemeinen in einer ärztlichen Praxis der Fall ist - wichtigere Dinge zu bedenken sind. Die Erfindung sucht daher auch nach einer Möglichkeit, das Ansetzen der Mischdüse zu vereinfachen. Das gelingt ihr durch die Kombination zweier Merkmale. Zum einen wird eines der beiden Kupplungsteile befähigt, in Längsrichtung gegenüber dem anderen gegen Federkraft auszuweichen und/oder das antriebsseitige Kupplungsteil wird in dem Zustand, in dem die Mischdüse auszuwechseln ist, gänzlich zurückgezogen. Zum anderen wird dafür gesorgt, daß beim Einschalten des Geräts die Antriebswelle sehr langsam läuft, so daß sie genügend Zeit hat, unter der Federkraft bzw. während ihres Ausschiebens die für die Kupplungsstellung vorgesehene relative Drehstellung zu dem anderen Kupplungsteil zu finden und darin richtig einzurasten. Die während des normalen Auspreß- und Mischbetriebs vorgesehene hohe Mi-scherdrehzahl ist nicht zum Einkuppeln geeignet. Da diese hohe Mischerdrehzahl aber erst dann benötigt wird, wenn die Vorschubstempel die Kartuschenkolben erreicht haben und der Vorschubantrieb unter Last gelangt, kann man die Drehzahlumstellung der Mischerantriebswelle gleichfalls vom Lastzustand des Vorschubantriebs abhängig machen. Es wird deshalb vorgesehen, daß der Betrieb des Mischerantriebs mit verminderter Geschwindigkeit dann stattfindet, wenn fehlende Last festgestellt wird. Dieses Merkmale (Anspruch 8) verdient ggf. unabhängigen Schutz von den vorgeordneten Ansprüchen. Gleichzeitig kann beim schnellen Rücklauf automatisch der Antrieb der Mischerwelle gestoppt werden.

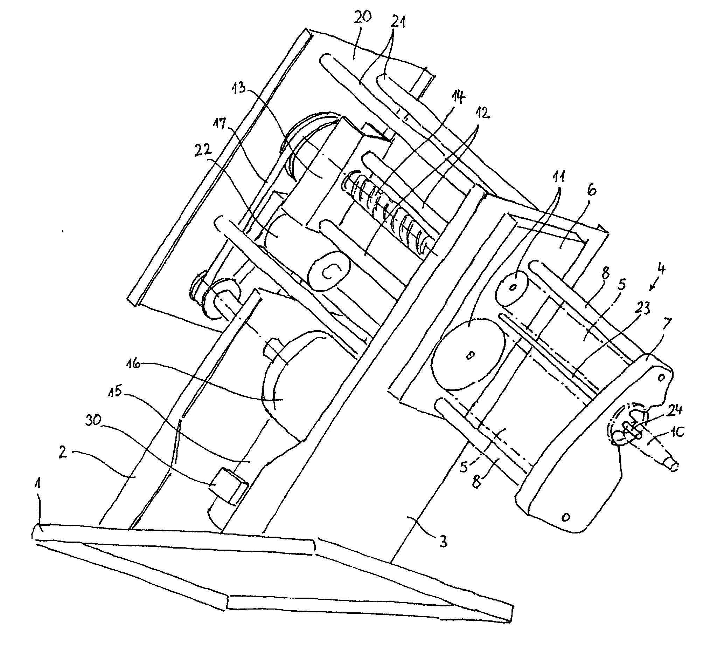

Die Erfindung wird im folgenden näher unter Bezugnahme auf die Zeichnung erläutert, die ein vorteilhaftes Ausführungsbeispiel veranschaulicht. Darin zeigt die einzige Figur eine perspektivische Gesamtansicht des Geräts.

Von einem Fußteil 1 erheben sich die Trägerplatten 2, 3. An letzterer ist eine Halterung 4 für strichpunktiert angedeutete Kartuschen 5 vorgesehen. Es spielt in diesem Zusammenhang keine Rolle, ob die Kartuschen, die vorzugsweise zylindrisch ausgebildet sind, unmittelbar mit den Komponenten befüllt sind oder einen ggf. auswechselbaren, die Komponente enthaltenden Schlauchbeutel aufnehmen.

Die Halterung 4 umfaßt eine hintere Halterungsplatte 6 und eine vordere Halterungsplatte 7, die durch Anker 8 zusammengehalten sind. Die Kartuschen 5 können dazwischen passend eingesetzt werden. Es können weitere, nicht gezeigte Halterungsmittel vorgesehen sein, die ihre seitliche Positionierung bewirken.

An der vorderen Halterungsplatte 7 ist eine nicht dargestellte Einrichtung zum Anbringen einer strichpunktiert angedeuteten Mischdüse 10 vorgesehen. Diese weist an ihrem der Halterungsplatte 7 zugewendeten Ende zwei Einlaßöffnungen auf, die in bekannter Weise mit den Auslaßöffnungen der Kartuschen 5 direkt oder indirekt kommunizieren. Das Anspruchsmerkmal, daß die Kartuschen nebeneinander angeordnet sind, soll nur besagen, daß sie so angeordnet sind, daß sie gleichzeitig und synchron betätigt werden können. Eine darüber hinausgehende Positionsbeschränkung, beispielsweise auf parallele Anordnung, ist damit nicht beabsichtigt, obwohl diese offensichtlich vorteilhaft ist.

Die Kartuschen 5 enthalten Kolben. Diese können ggf. dann entfallen, wenn die Kartuschen Folienbeutel enthalten. Die Stempel treten dann an die Stelle der im Anspruch genannten Kolben. Für den Vorschub der Kolben bzw. der hinteren Beutelstirnfläche sind in dem Gerät Stempel 11 vorgesehen, die in der Zeichnung in dem Zustand gezeigt sind, in welchem sie zum Zwecke des Kartuschenaustauschs in die hintere Halterungsplatte 6 zurückgezogen sind. Sie sind am vorderen Ende von Stempelstangen 12 angeordnet, deren hintere Enden starr in einem Querriegel 13 befestigt sind, der mittels einer Gewindespindel 14 in Richtung zur Mischdüse vorgeschoben oder in Gegenrichtung zurückgezogen werden kann. Die Stempel 11 können ggf. ausgetauscht werden, wenn Kartuschen unterschiedlichen Durchmessers einzusetzen sind. Auch ihr Abstand voneinander kann veränderbar sein. Wenn die Kartuschen 5 in das Gerät eingelegt sind, werden die Stempel 11 durch Vorschub des Querriegels 13 vorgeschoben, bis sie die Kolben in den Kartuschen 5 erreichen. Diese Vorschubbewegung kann automatisch durch das Einlegen der Kartuschen oder manuell durch das Einschalten des Geräts ausgelöst werden.

Für den Vorschub und Rückzugsantrieb der Gewindespindel 14 ist ein Motor 15 mit Getriebe 16 vorgesehen, dessen Antriebsbewegung durch einen Riementrieb 17 auf die Gewindespindel 14 übertragen wird. Für die Lagerung der Gewindespindel 14 und der zum Riementrieb 17 gehörigen Ringscheiben sind nicht dargestellte Einrichtungen vorgesehen, die an der Platte 3 und einer weiteren Gestellplatte 20 angeordnet sind, die über Säulen 21 starr mit der Platte 3 verbunden ist.

Ein weiterer Motor 22 ist an der Platte 20 angeordnet und in nicht gezeigter Weise antriebsmäßig verbunden mit einer Mischerantriebswelle 23, die zwischen den Platten 3 und 20 koaxial innerhalb der Gewindespindel 14 liegt, zwischen den Kartuschen 5 von der hinteren Halterungsplatte 6 zur vorderen Halterungsplatte 7 geführt und in dieser gelagert ist. Sie schaut aus der vorderen Halterungsplatte 7 in Form eines Ansatzes 24 heraus, der zum Zwecke der Drehverbindung mit der nicht gezeigten Mischerwelle beispielsweise mehrkantig (nicht gezeigt) ausgebildet ist. Der Wellenansatz 24 kann gegen Federkraft zurückgeschoben werden, bis er nicht mehr aus der vorderen Halterungsplatte 7 herausschaut. Es kann auch vorgesehen sein, daß dann, wenn die Stempel 11 zum Zwecke des Kartuschenaustausches gänzlich zurückgezogen sind, er gleichfalls in die vordere Halterungsplatte 7 zurückgezogen ist, um das Ansetzen einer neuen Mischerdüse 10 zu erleichtern.

Es ist eine bei 30 schematisch angedeutete elektronische Einheit 30 vorgesehen. Die erste Funktion dieser elektronischen Einheit besteht darin, die Drehzahl des Motors dann, wenn er sich im Auspreßbetrieb unter Last befindet, auf einem vorbestimmten Wert konstant zu regeln. Dies ist die Funktion, die das konstante Mischergebnis sichert.

Eine zweite Funktion der elektronischen Einheit 30 besteht darin, durch Messung der Stromaufnahme des Motors 15 festzustellen, ob er sich unter Last befindet oder nicht. Im ersteren Fall ist anzunehmen, daß die Stempel 11 sich in Anlage an den Zylindern der Kartuschen 5 befinden und der Auspreßwiderstand der Kartuschen die von der Einheit 30 gemessene hohe Stromaufnahme veranlaßt. In diesem Fall sorgt die elektronische Einheit 30 dafür, daß der Motor 15 mit der vorbestimmten Vorschubgeschwindigkeit betrieben wird.

Stellt die elektronische Einheit hingegen fest, daß die Stromaufnahme unterhalb eines Wertes liegt, der normalerweise nur dann erreicht wird, wenn der Antrieb unter Last ist, sorgt sie dafür, daß der Motor 15 mit höherer (beispielsweise der zehnfachen) Geschwindigkeit betrieben wird. Dies gilt unabhängig von der Drehrichtung des Motors 15.

Drittens sorgt die elektronische Einheit 30 dafür, daß der Motor 22 mit hoher Mischgeschwindigkeit betrieben wird, wenn sich der Antrieb 15 unter Last befindet. Umgekehrt sorgt sie dafür, daß der Motor 22 mit wesentlich geringerer (beispielsweise mit einem Zehntel oder Zwanzigstel der Mischgeschwindigkeit) betrieben wird, wenn der Motor 15 im Vorwärtslauf nicht unter Last ist. Beim Rücklauf wird der Antrieb des Mischers automatisch gestoppt.

Ein (nicht gezeigter) Sensor ist so angeordnet, daß er dann anspricht, wenn die Vorschubstempel 11 ihre am weitesten vorgeschobene Stellung erreichen, die der vollständigen Entleerung der Kartuschen 5 zugeordnet ist. Wenn der Sensor in dieser Stellung anspricht, veranlaßt er die elektronische Einheit 30 dazu, die Drehrichtung des Motors 15 umzukehren, so daß die Stempel 11 aus den Kartuschen zurückgezogen werden, und zwar im Eilgang, weil sie sich dabei nicht unter Last befinden. Ein zweiter Sensor (nicht gezeigt) stellt fest, wann die Stempel 11 ihre in der Figur dargestellte, vollständig zurückgezogene Position erreicht haben. Er veranlaßt dann den Motor 15 zu stoppen. Der Rückzug der Stempel 11 kann auch manuell durch einen (nicht gezeigten) Schalter ausgelöst werden, wenn Kartuschen ausgetauscht werden sollen, bevor sie entleert sind.

Wenn die Stempel 11 zurückgezogen sind, können die Kartuschen 5 ausgetauscht werden. Selbsttätig nach dem Einlegen der neuen Kartuschen oder durch manuelle Veranlassung wird der Motor 15 wieder eingeschaltet. Da die Stempel 11 sich zunächst nicht unter Last befinden, laufen sie im Eilgang vor, bis sie die Kolben der Kartuschen 5 erreichen. Die Stromaufnahme steigt dann an, und die elektronische Einheit 30 schaltet den Motor 15 auf seine niedrige, konstant zu haltende Drehgeschwindigkeit um.

Wenn die Stempel 11 zurückgezogen sind, ist zweckmäßigerweise auch der Ansatz 24 der Mischerantriebswelle 23 zurückgezogen, so daß die Mischdüse 10 leicht ausgewechselt werden kann. Wenn nach dem Austausch der Kartuschen der Stempelvorschub 11 beginnt, wird auch der Motor 22 wieder in Gang gesetzt, und zwar zunächst mit geringer Geschwindigkeit, solange die elektronische Einheit 30 noch keinen Lastzustand feststellt. Der Wellenansatz 24 der Mischerantriebswelle 23 hat dann genügend Zeit, die zutreffende Einraststellung im Verhältnis zu dem Kupplungsteil der Mischerwelle zu finden und aufgrund des auf ihn lastenden Federdrucks in die Kupplungsstellung einzurükken. Erst wenn die Stempel 11 die Kolben der Kartuschen 5 erreicht haben und die elektronische Einheit 30 demzufolge den Lastzustand feststellt, wird der Motor 22 auf die hohe Drehzahl beschleunigt, die dem Mischerbetrieb zugeordnet ist. Zum Ende einer Applikation wird der Vorlauf per Knopfdruck gestoppt, dadurch wird gleichzeitig ein geringer Rücklauf des Motors 15 ausgelöst, der eine Entlastung des Systems gewährleistet.

## Patentansprüche

1. Verfahren zum Erzeugen einer Mehrkomponentenmasse, insbesondere für Dentalzwecke, durch Auspressen ihrer Komponenten aus nebeneinander angeordneten, austauschbaren Kartuschen, die in einem Mischer münden, durch gemeinsamen Vorschub ihrer Kolben mittels eines Elektroantriebs, **dadurch gekennzeichnet, daß** die Vorschubgeschwindigkeit beim Auspreßbetrieb konstant auf einem vorbestimmten Wert geregelt wird, und daß der Lastzustand des Antriebs festgestellt wird und dieser bei fehlender Last mit höherer Rück- bzw. Vorholgeschwindigkeit betrieben wird.

2. Vorrichtung zum Erzeugen einer Mehrkomponentenmasse, insbesondere für Dentalzwecke, durch Auspressen und Mischen ihrer Komponenten aus Kartuschen (5), die in einem Mischer (10) münden und austauschbar in dem Gerät angeordnet sind, das einen Elektromotor (15) für den gemeinsamen Vorschub der den Kartuschen (5) zugeordneten Kolben aufweist, **dadurch gekennzeichnet, daß** der Elektromotor (15) mit einer Regeleinrichtung (30) zum Konstanthalten seiner Drehzahl beim Auspreßbetrieb auf einem vorbestimmten Wert versehen ist, und eine Einrichtung (30) zum Feststellen des Lastzustands und zum Be trieb des Elektromotors (15) mit höherer Rück- bzw. Vorholgeschwindigkeit bei fehlender Last vorgesehen ist.

3. Vorrichtung nach Anspruch 2, **dadurch gekennzeichnet, daß** die Einrichtung (30) zum Feststellen des Lastzustands zum Feststellen der Stromaufnahme des Elektromotors (15) ausgebildet ist.

4. Vorrichtung nach Anspruch 2 oder 3, **dadurch gekennzeichnet, daß** für die Drehzahlregelung und die Ansteuerung der höheren Geschwindigkeit des Motors (15) dieselbe elektronische Einheit (30) verwendet wird.

5. Vorrichtung nach einem der Ansprüche *2* bis, **dadurch gekennzeichnet, daß** sie mit einer Einrichtung zum Feststellen der Entleerungsposition der Kolben und mit einer Einrichtung zum Umsteuern des Antriebs des Motors (15) beim Erreichen derselben versehen ist.

6. Vorrichtung nach Anspruch 2 - 5, **dadurch gekennzeichnet, daß** der Mischer (10) ein dynamischer Mischer ist.

7. Vorrichtung nach einem der Ansprüche 2 bis 5, **dadurch gekennzeichnet, daß** der Mischer ein statischer Mischer ist.

8. Vorrichtung nach Anspruch 6, **dadurch gekennzeichnet, daß** ein Mischerantrieb (22) und eine Kupplung zwischen einem antriebsseitigen und einem mischerseitigen Kupplungsteil (24) des Mischerantriebs vorgesehen ist, die durch eine von der relativen Drehstellung der Kupplungsteile abhängige Einrückbewegung eines Kupplungsteils (24) zu schließen ist, und daß der Mischerantrieb eine verminderte Geschwindigkeit bei fehlender Last hat.

## Claims

1. Method for generating a multi-component compound, in particular for dental purposes, by pressing its components out from exchangeable cartridges which are arranged alongside one another and open into a mixer, by means of common advance of their plungers with the aid of an electric drive, **characterized in that** the advance speed in pressing-out mode is regulated constantly at a predetermined value, and **in that** the load state of the drive mechanism is ascertained and this drive mechanism is driven at a higher return speed or feed speed in the absence of a load.

2. Device for generating a multi-component compound, in particular for dental purposes, by mixing and pressing its components out from cartridges (5), which open into a mixer (10) and are arranged in the equipment in an exchangeable manner, which equipment comprises an electric motor (15) for common advance of the plungers assigned to the cartridges (5), **characterized in that** the electric motor (15) is provided with a regulating unit (30) for keeping its speed of rotation constant in pressing-out mode at a predetermined value, and a unit (30) is provided for ascertaining the load state and for driving the electric motor (15) at a higher return speed or feed speed in the absence of a load.

3. Device according to Claim 2, **characterized in that** the unit (30) for ascertaining the load state is designed for detecting the current consumption of the electric motor (15).

4. Device according to Claim 2 or 3, **characterized in that** the same electronic unit (30) is used for regulating the speed of rotation and initiating the higher speed of the motor (15).

5. Device according to one of Claims 2 to 4, **characterized in that** it is provided with a unit for ascertaining the emptying position of the plungers and with a unit for reversing the drive of the motor (15) when this position is reached.

6. Device according to Claims 2 to 5, **characterized in that** the mixer (10) is a dynamic mixer.

7. Device according to one of Claims 2 to 5, **characterized in that** the mixer is a static mixer.

8. Device according to Claim 6, **characterized in that** a mixer drive (22) and a coupling mechanism between a drive-side coupling part and a mixer-side coupling part (24) of the mixer drive are provided, which coupling is to be closed by a meshing movement of one coupling part (24), dependent on the relative position of rotation of the coupling parts, and **in that** the mixer drive has a reduced speed in the absence of a load.

## Revendications

1. Procédé pour générer une masse à plusieurs composants, en particulier pour des applications dentaires, par l'expulsion de ses composants à partir de cartouches disposées les unes à côtés des autres et interchangeables, qui débouchent dans un mélangeur, par l'avancement commun de leurs pistons au moyen d'un moteur électrique, **caractérisé en ce que** la vitesse d'avancement en mode d'expulsion est réglée de façon constante sur une valeur prédéfinie, et **en ce que** l'état de charge du moteur est constaté et que ce moteur est exploité avec une vitesse de recul ou d'avance supérieure en cas d'absence de charge.

2. Dispositif pour fabriquer une masse à plusieurs composants, en particulier pour des applications dentaires, par l'éjection et le mélange de ses composants à partir de cartouches (5), qui débouchent dans un mélangeur (10) et sont disposées dans l'appareil de façon interchangeable, lequel présente un moteur électrique (15) pour l'avancement commun des pistons attribués aux cartouches (5), **caractérisé en ce que** le moteur électrique (15) est pourvu d'un système de réglage (30) pour le maintien à une valeur constante de son régime lors du mode d'expulsion sur une valeur prédéfinie, et **en ce qu'**il est prévu un dispositif (30) pour la constatation de l'état de charge et pour le fonctionnement du moteur électrique (15) avec une vitesse de recul ou d'avancement supérieure en cas d'absence de charge.

3. Dispositif selon la revendication 2, **caractérisé en ce que** le dispositif (30) est conçu pour déterminer l'état de charge pour la détermination de la consommation du moteur électrique (15).

4. Dispositif selon la revendication 2 ou 3, **caractérisé en ce que** la même unité (30) électronique est utilisée pour le réglage du régime et l'amorçage de la vitesse supérieure du moteur (15).

5. Dispositif selon l'une quelconque des revendications 2 à 4, **caractérisé en ce qu'**il est pourvu d'un système pour la détermination de la position de vidage des pistons et d'un système pour l'inversion de l'entraînement du moteur (15) lorsqu'il atteint celui-ci.

6. Dispositif selon les revendications 2 à 5, **caractérisé en ce que** le mélangeur (10) est un mélangeur dynamique.

7. Dispositif selon l'une quelconque des revendications 2 à 5, **caractérisé en ce que** le mélangeur est un mélangeur statique.

8. Dispositif selon la revendication 6, **caractérisé en ce qu'**il est prévu une commande de mélangeur (22) et un couplage entre une partie de couplage (24) côté commande et une partie de couplage côté mélangeur de la commande de mélangeur, qui doit être fermé par un mouvement d'engagement, dépendant de la position de rotation relative des parties de couplage, d'une pièce de couplage (24), et **en ce que** la commande de mélangeur a une vitesse réduite en cas d'absence de charge.
